# EUROPEAN PATENT APPLICATION

(11) **EP 1 300 968 A1**
(43) Date of publication of application: **09.04.2003**
(21) Application number: 01440330.7
(22) Date of filing: 03.10.2001
(51) Int. Cl.: H04B 10/18, H04J 14/02

(54) **A device for demultiplexing optical RZ signals**

(71) Applicant: ALCATEL, 75008 Paris (FR)
(72) Inventor: Bigo, Sébastien, F-91300 Massy (FR); Pincemin, Erwan, F-22290 Gommenech (FR)
(74) Representative: Rausch, Gabriele, Dr.

(57) **Abstract**

The invention provides an optical device (100) for demultiplexing at least two RZ optical signals (i₁, i₂, i₃), each having a distinct non-zero intensity, said signals belonging to a given transmission channel having a given carrier frequency, and the device comprising:
· means (12) for shifting said signals spectrally as a function of their intensities, thereby giving rise to shifted signals, each presenting at least one distinct shifted carrier frequency; and
· means (14) for extracting said shifted signals as a function of their shifted carrier frequencies.

## Description

The present invention relates to the field of optical fiber transmission. More particularly, it relates to return to zero (RZ) signal transmission systems such as transmission systems using soliton pulses of distinct intensities, for example.

As is known, attempts are being made to increase the capacity of optical transmission systems. In present wavelength division multiplex (WDM) type optical fiber transmission systems, it is desired to increase spectrum efficiency expressed in terms of bits per second per hertz (bit/s/Hz), i.e. the ratio of the modulation rate over the frequency spacing between adjacent channels, while avoiding interchannel spectrum overlap.

One of the means that can be envisaged is to make use of multilevel RZ coding. Under such circumstances, the RZ signals are RZ pulses having distinct intensities. By way of example, for a channel having a given carrier frequency, RZ pulses at a repetition rate of 10 GHz are coded in four levels of distinct intensities namely one zero level and three non-zero levels. This produces a train of pulses at 20 gigabits per second (Gbit/s) occupying a spectrum bandwidth that is about half the width corresponding to a conventional binary pulse train of two levels at 20 Gbit/s.

However, although it is presently known how to generate RZ pulses of distinct intensities, means for recovering and in particular for demultiplexing such pulses of different levels are limited and provide poor performance.

The only known solution consists in using electronic means which are incapable of operating at very high rates in order to avoid distorting the pulses because of nonlinearities.

An object of the invention is to provide an optical device for demultiplexing RZ optical signals of distinct intensities, in particular for high data rate optical fiber transmission systems that are simple to manufacture and operate.

More precisely, the invention provides an optical device for demultiplexing at least two RZ optical signals, each having a distinct non-zero intensity, said signals belonging to a given transmission channel having a given carrier frequency, and the device comprising:
· means for shifting said signals spectrally as a function of their intensities, thereby giving rise to shifted signals, each presenting at least one distinct shifted carrier frequency; and
· means for extracting said shifted signals as a function of their shifted carrier frequencies.

Thus, the device of the invention makes it possible to process the signals separately as a function of their intensities. By way of example, for the 20 Gbit/s train of four RZ signals of distinct level intensities previously described, the device of the invention enables three frequency-shifted signal trains to be extracted together, each train being at the repetition rate of 10 GHz, i.e. at a rate compatible with conventional detection systems. Thus, by incorporating the device of the invention in a high data transmission system, it is possible for the system to make use of high performance multilevel coding.

Advantageously, the RZ signals of the invention can be soliton pulses.

Known RZ signals include solitons which are generally transmitted in the portion of an optical fiber that presents abnormal dispersion. Solitons are pulses having a sech² hyperbolic secant waveform. With pulses of this waveform, the non-linearity in the corresponding portion of the fiber compensates for dispersion of the optical signal. Soliton transmission is modelled in conventional manner by the non-linear Schrödinger equation.

It is not necessary to provide a soliton source in order to transmit solitons since an optical fiber of sufficient length can itself be very efficient at delivering pulses that are solitons, even when starting from pulses of Gaussian or square waveform.

Furthermore, C.R. Menyuk in "Stability of solitons in birefringent optical fibers I: Equal propagation amplitudes", published in Optics Letters, Vol. 12, No. 8, August 1987, proposes a model of the effects of birefringence on the propagation of RZ signals such as solitons in monomode fibers. Birefringence, i.e. the difference in refractive index between the two polarization directions of an optical fiber, leads to a soliton pulse being split into two components which propagate at different speeds for each of the two polarization directions. The article by C.R. Menyuk shows that above a certain power level, the Kerr effect leads to soliton pulses becoming stable in time by cross-phase modulation between the soliton components propagating with each of the two polarization directions. Mutual time trapping then takes place between the components with the two polarization directions; thus, above a certain intensity level, the components in both of the polarization directions travel together. The threshold intensity depends on the birefringence of the fiber.

M.N. Islam et al., in "Soliton trapping in birefringent optical fibers" published in Optics Letters, Vol. 14, No. 18, September 1989, describe an experimental demonstration of orthogonally polarized solitons being trapped in birefringent optical fibers; that experiment confirmed the results put forward in the above-cited article by C.R. Menyuk.

Those articles by C.R. Menyuk and M.N. Islam et al. mention the case of soliton pulses. More generally, other types of RZ signal can exist in which the components on the two polarization directions of a birefringent fiber become trapped by cross-phase modulation, in the same manner as for solitons.

In a preferred embodiment, the means of the invention for spectrally shifting the signals can thus comprise a birefringent fiber. The birefringence of the fiber can be greater than or equal to 1×10⁻⁵.

In this embodiment, each signal of intensity greater than the threshold intensity is duplicated and thus presents two shifted carrier frequencies disposed symmetrically about the initial carrier frequency of the transmission channel. The spacing between the shifted carrier frequencies and the initial carrier frequency increases with increasing intensity of the signal. Furthermore, the two components of the shifted signal of the invention coincide in time at the outlet from the birefringent fiber.

To optimize spectral shifting, it is desirable for the signals that are injected into the birefringent fiber to be polarized in a direction that substantially bisects the two polarization directions of the fiber.

Thus, in this embodiment, the optical device of the invention preferably comprises means for polarizing the signals, which means are disposed at the inlet to the birefringent fiber.

Furthermore, in an embodiment of the invention, the means of the invention for extracting the shifted signals comprise a wavelength demultiplexer.

In another embodiment of the invention, the means for the invention for extracting the shifted signals comprise one discrete bandpass type filter per shifted signal, each filter being centered on a distinct "filter" frequency that is substantially equal to one or other of the two shifted carrier frequencies of the associated shifted signal.

In this embodiment, one-half of the half-height bandwidth of each filter can be less than the frequency spacing(s) between the filter frequency and the adjacent filter frequency(ies).

This makes it possible to limit mixing between a portion of the adjacent shifted signals with the associated signal, thus enabling better data recovery.

Furthermore, the optical device of the invention can include means for amplifying the signals, which means can be located upstream from the shifting means.

When the spectrum shifting means comprise a birefringent fiber, such an amplifier can serve to adjust the intensity of the signals to beyond the given threshold intensity.

Other characteristics and advantages of the invention will appear on reading the following description of embodiments of the invention, given by way of example and with reference to the accompanying drawings, in which:
· Figure 1 is a diagrammatic representation of a train comprising four pulses having distinct intensities;
· Figure 2 is a diagram of a first embodiment of an optical multiplexing device of the invention;
· Figure 3 is a diagram showing the spectrum of the Figure 1 pulses having non-zero intensity as input to the embodiment of the invention shown in Figure 2;
· Figure 4 is a diagram showing the spectrum of the Figure 1 pulses having non-zero intensity after passing through a birefringent fiber of the invention, and also showing the filter characteristic of one of the bandpass filters as used in the Figure 2 embodiment of the invention;
· Figure 5 is a diagram showing the spectra of the Figure 1 pulses having non-zero intensity as output from the device of the invention shown in Figure 2; and
· Figure 6 is a diagram of a second embodiment of an optical demultiplexing device of the invention.

In all of these figures, elements which are common, i.e. which perform the same functions, are given the same reference numerals.

In order to demultiplex RZ optical signals, the invention proposes imparting differing spectrum shifts to the RZ signals as a function of their respective intensities, prior to extracting them individually.

To apply spectrum shifts to such signals as a function of their intensities, the invention proposes trapping signals propagating on the two polarization directions in a birefringent optical fiber. As mentioned above, such trapping occurs only above a certain intensity threshold.

The invention applies in particular to soliton or to other RZ signals whose components on the polarization directions of a birefringent fiber can become trapped by cross-phase modulation, as is the case for solitons.

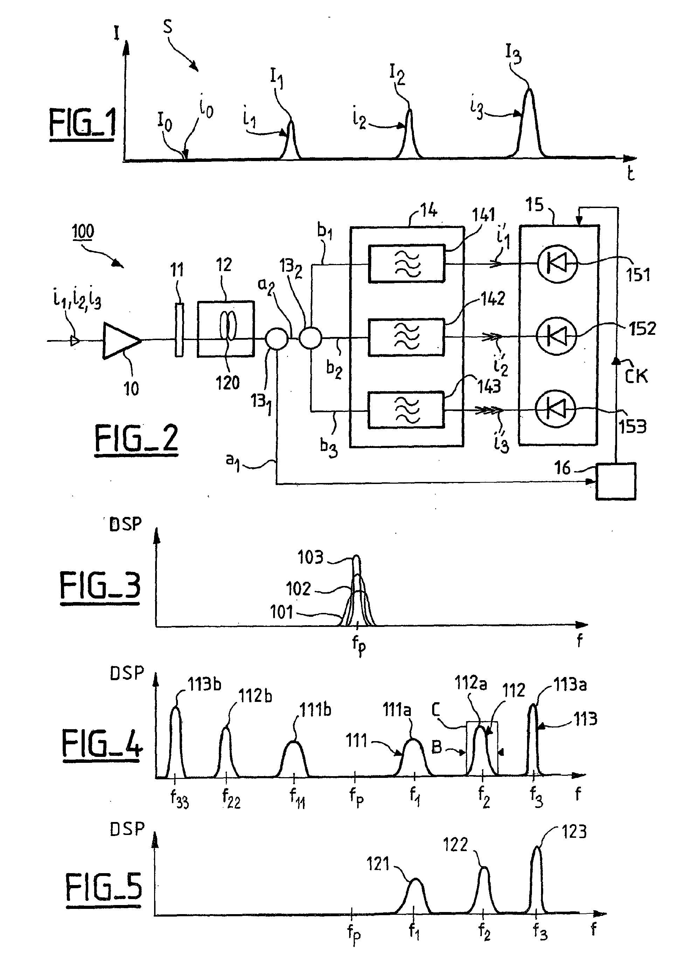

Figure 1 is a diagram of a train S of four RZ signals in the form of pulses i₀, i₁, i₂, i₃ transmitted in succession from left to right in the figure. Time is plotted along the abscissa, which is equivalent to length along a transmission system; and intensity is plotted up the ordinate. The first pulse i₀ referred to the zero level has zero intensity I₀ implemented by practically cutting off the signal source. The other three pulses i₁, i₂, i₃ referred to non-zero levels are of increasing non-zero intensities respectively equal to I₁, I₂, and I₃. Such train S is also called multilevel signal. All of the pulses belong to a given transmission channel having a given carrier frequency. By way of example, the transmission channel can form part of the C transmission band (1530 nanometers (nm) to 1560 nm) or the L band (1565 nm to 1610 nm). The repetition frequency of pulses is for example 10 GHz leading to a rate of 20 Gbit/s. Obviously, a higher rate is obtained by having a train pulse at higher repetition frequency and/or coding with more levels.

Figure 2 is a diagram of a first embodiment of an optical demultiplexer device 100 of the invention which comprises in succession:
· an amplifier 10 at the inlet to the device 100;
· followed by signal polarization means 11;
· means 12 for spectrally shifting signals as a function of intensity, which means advantageously comprise a birefringent fiber 120 of given threshold intensity; and
· means 14 for extracting the signals shifted by the shift means, the means 14 advantageously comprising three discrete filters 141, 142, and 143 of the bandpass type.
· detection means 15 comprising for example photodetector as photodiodes 151, 152, 153 enable to convert optics signals in electric signals.

In the embodiment of Figure 1, there is also provided, upstream from the means 14, a coupler 13₁ having two outlet branches a₁ and a₂. One of the outlet branches a₁ in combination with clock recovery means 16 and the other a₂ leading to another coupler 13₂ having three outlet branches b₁, b₂, and b₃.

The dynamic behavior of the device 100 is described below with reference to the paths of the pulses i₀, i₁, i₂, and i₃.

The pulses i₁, i₂, and i₃ are initially injected into the inlet of the device 100 via the amplifier 10 so that the pulses i₁, i₂, and i₃ present intensities that are higher than the threshold intensity of the birefringent fiber 120.

Thereafter, the pulses i₁, i₂, and i₃ are polarized by the means 12 to occupy a direction that bisects or substantially bisects the two polarization directions of the fiber 120 so as to generate two components (not shown) per pulse, each component propagating on a distinct polarization direction.

As mentioned above, for an inlet pulse that is beneath a certain intensity referred to as the threshold intensity, the two components propagate at different speeds, so at the outlet from the fiber 120 two components are obtained one on each of the two polarization directions, in which the components have become shifted in time, and both of these components are spectrally at the frequency of the inlet RZ pulse, i.e. at the initial carrier frequency.

In contrast, above this threshold intensity, the Kerr effect serves to trap the components on the two polarization directions; the components at the outlet from the fiber therefore coincide in time, but are spectrally shifted.

The corresponding threshold intensity is mentioned in the above-cited articles by C.R. Menyuk and M.N. Islam. The intensity necessary for achieving mutual trapping between the two components in a birefringent fiber can easily be determined experimentally, by analyzing the spectrum and time positions of pulses injected into the birefringent fiber 120.

By way of example, the fiber 120 can present the following characteristics:
· dispersion: 8.75 picoseconds per nanometer per kilometer (ps/nm/km) ;
· birefringence equal to 2.4×10⁻⁵;
. length: 20 meters (m); and
· effective section: 50 square micrometers (µm²).

By way of example, in such a fiber, an optimal intensity for trapping the components of a pulse on both polarization directions is 84 picojoules (pJ). The fiber 120 then makes it possible to shift the pulses by not less than 1 terahertz (THz). These values are given for pulses having a full width at half maximum (FWHM) of about 300 femtoseconds (fs) at a carrier wavelength equal to 1.686 µm.

At the output from the shift means 120, the shifted pulses enter the coupler13₁. Then, a small part (not shown) of each shifted pulse is driven via the branch a₁ to the clock recovery means 16 which provide for example a sinusoidal electric clock signal CK sent to detection means 15 for piloting signals. From the other branch a₂ the shifted pulses enter the coupler 13₂ which produces three pulses i'₁, i'₂, and i'₃ of respective intensities I₁/3, I₂/3, and I₃/3 on each of the outlet branches b₁, b₂, and b₃. The branches b₁, b₂, and b₃ lead to three respective bandpass filters 141, 142, and 143. Each filter 141, 142, and 143 serves to extract a single pulse i'₁, i'₂, or i'₃.

Each pulse i'₁, i'₂, or i'₃ is injected to detection means 15 and is converted into electric pulses (not shown) by a photodiode 151, 152, 153. Detection means 15 include a chip (not shown) forming a pulse train starting from all the electric pulses generated at the same repetition frequency than the initial optic pulse train S.

In addition, the shifting means 12 and extractor means 14 are obviously transparent to a zero level pulse (not shown) which passes through them.

Figure 3 shows curves 101, 102, and 103 representing the respective spectra of the pulses i₁, i₂, and i₃ at the inlet to the device 100. Frequency is plotted along the abscissa and power spectrum density is plotted up the ordinate. In conventional manner, the RZ pulses are represented by respective peaks centered on the given carrier frequency fₚ.

Figure 4 is a diagram showing the spectra 111, 112, and 113 of the pulses i₁, i₂, and i₃ at the outlet from the birefringent fiber 120. For each shifted pulse i₁, i₂, and i₃ this diagram shows the two spectra 111a & 111b, 112a & 112b, 113a & 113b of the two simultaneous components that are frequency shifted symmetrically about the carrier frequency fₚ. Thus each shifted pulse i₁, i₂, and i₃ presents two shifted carrier frequencies f₁ & f₁₁, f₂ & f₂₂, and f₃ & f₃₃ respectively above and below the carrier frequency fₚ. The representation of each spectrum is schematic as each two shifted carrier frequencies per pulse may be nearer from each other.

Figure 4 also shows a curve C specifying the filter characteristic for a bandpass filter 142 suitable for use in the invention. This rectangular filter characteristic is centered on a "filter" frequency that is substantially equal to the shifted carrier frequency f₁ of the associated shifted pulse i'₁. The half-height bandwidth B of the filter 142 is less than either of the frequency spacings f₃-f₂ and f₂-f₁. The other filters 141 and 143 present characteristics that are similar (not shown).

Figure 5 is a diagram showing the spectra 121, 122, and 123 of the pulses i'₁, i'₂, and i'₃ at the outlet from the device of the invention 100.

Pulses of distinct intensities have thus been demultiplexed.

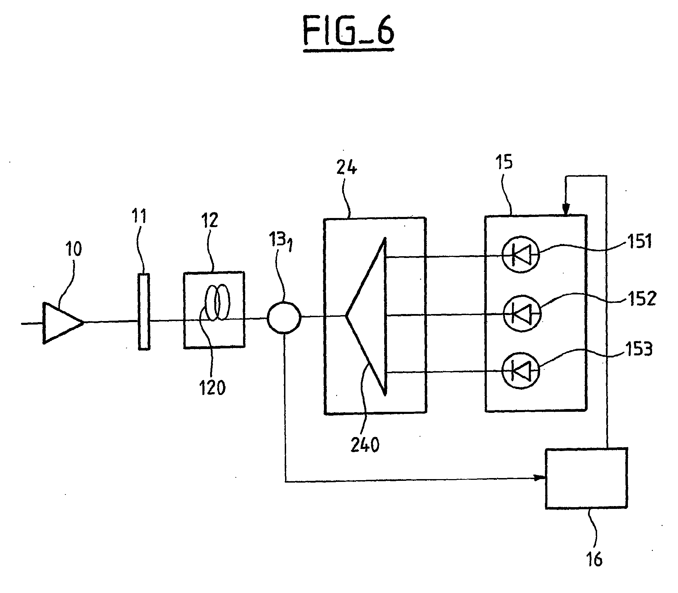

Figure 6 is a diagram of a second embodiment of an optical device 200 of the invention for demultiplexing RZ pulses of distinct intensities.

In addition to the elements 10, 11, 12 & 120, 13₁, 15 & 151 & 152 & 153, and 16 that are the same as in the device 100, this device 200 has means 24 for extracting the signals as shifted by the shift means 12, with the means 24 advantageously comprising a WDM type demultiplexer 240.

The path followed by the RZ pulses is similar to that described for the device 100.

Naturally, the present invention is not limited to the examples and embodiments described and shown, and the invention can be the subject of numerous variants that are available to the person skilled in the art.

The intensity values of the RZ pulses at the inlet to the birefringent fiber and the birefringence values of the fiber are given purely by way of example.

Similarly, the number of non-zero levels on a given transmission channel can equally well be greater than or equal totwo, and the ratios between the intensities of distinct levels can be different.

It is also possible to provide as many devices of the invention as there are data transmission channels so as to cover an entire transmission window.

Furthermore, any kind of filter can be used, and its filter frequency can equally well be equal to the upper or to the lower shifted carrier frequency.

## Claims

1. An optical device (100, 200) for demultiplexing at least two RZ optical signals (i₁, i₂, i₃), each having a distinct non-zero intensity, said signals belonging to a given transmission channel having a given carrier frequency (fₚ), and the device comprising:
· means (12) for shifting said signals spectrally as a function of their intensities, thereby giving rise to shifted signals each presenting at least one distinct shifted carrier frequency (f₁ & f₁₁, f₂ & f₂₂, and f₃ & f₃₃); and
· means (14, 24) for extracting said shifted signals as a function of their shifted carrier frequencies.

2. An optical device (100, 200) according to claim 1, **characterized in that** said RZ signals (i₁, i₂, i₃) are soliton pulses.

3. An optical device (100, 200) according to claim 1 or claim 2, **characterized in that** said means (12) for spectrally shifting said signals (i₁, i₂, i₃) comprise a birefringent fiber (120).

4. An optical device (100, 200) according to claim 3, **characterized in that** said fiber (120) presents birefringence greater than or equal to 1×10⁻⁵.

5. An optical device (100, 200) according to claim 3 or claim 4, **characterized in that** it includes means (11) for polarizing said signals (i₁, i₂, i₃) , said means being located at the inlet to said fiber (120).

6. An optical device (200) according to any one of claims 1 to 5, **characterized in that** said means (24) for extracting said shifted signals comprise a wavelength demultiplexer (240).

7. An optical device (100) according to any one of claims 1 to 5, **characterized in that** said means (14) for extracting said shifted signals comprise one discrete bandpass type filter (141, 142, 143) per shifted signal, each filter being centered on a distinct "filter" frequency substantially equal to one of said shifted carrier frequencies (f₁, f₂, f₃) of the associated shifted signal.

8. An optical device (100) according to claim 7, **characterized in that** one-half of the half-height bandwidth of each filter (141, 142, 143) is less than the spacing(s) between the filter frequency (f₁, f₂, f₃) and the adjacent filter frequency(ies).

9. An optical device (100, 200) according to any one of claims 1 to 8, **characterized in that** it comprises means (10) for amplifying said signals (i₁, i₂, i₃), which means are located upstream from said shifting means (12).
